# FASCICULE DE BREVET EUROPEEN

(11) **EP 4 297 947 B1**
(45) Date de publication et mention de la délivrance du brevet: **21.01.2026**
(21) Numéro de dépôt: 22711608.4
(22) Date de dépôt: 23.02.2022
(51) Int. Cl.: B29C 37/00, B29C 70/08, B29C 70/44, B29C 70/48

(54) **PROCÉDÉ DE RÉALISATION D'UNE PIÈCE PAR MOULAGE, INSTALLATION DE MOULAGE ET UTILISATION D'UN FEUIL À CET EFFET**
VERFAHREN ZUR HERSTELLUNG EINES BAUTEILS DURCH FORMEN, FORMANLAGE UND VERWENDUNG EINER FOLIE AN DIESEM ENDE
METHOD FOR MANUFACTURING A COMPONENT BY MOULDING, MOULDING FACILITY AND USE OF A FILM TO THIS END

(30) Priorité: 23.02.2021 FR 2101760
(43) Date de publication de la demande: 03.01.2024
(73) Titulaire: Corso Magenta, 92000 Nanterre (FR)
(72) Inventeur: CHEVALLIER, Stanislas, 92000 Nanterre (FR); HUET, Gwendal, 92000 Nanterre (FR)
(74) Mandataire: Hautier IP
(86) Numéro de dépôt international: PCT/IB2022/051599
(87) Numéro de publication internationale: WO 2022/180546

(56) Documents cités:
- WO-A1-2016/110799
- FR-A1- 2 124 363
- US-A- 3 812 074

## Description

### Domaine de l'invention

La présente invention concerne d'une façon générale la fabrication de pièces moulées.

### Etat de la technique

Il existe de très nombreuses techniques pour la réalisation de pièces en volume par remplissage d'une zone ou d'une cavité de moulage avec un matériau liquide ou visqueux puis prise ou durcissement du matériau.

Il peut s'agir de pièces injectées par un matériau thermoplastique ou thermodurcissable, d'infusion de résine dans un moule où des éléments structurants ont été incorporés (notamment fibres minérales tels que tissus de verre, etc.), d'éléments en béton moulé, etc.

Le document FR2124363A1 donne également un autre exemple d'un procédé où l'on insère un matériau de renforcement dans un gel appliqué sur le moule, cette « croûte » étant combinée à un cœur formé d'une mousse expansible.

En règle générale, lorsqu'il est nécessaire de donner à de telles pièces un aspect de surface particulier et/ou des propriétés de surface particulières, on commence par réaliser le moulage, puis la pièce brute est extraite du moule et traitée (ponçage, enduisage, peinture, etc.) pour lui donner l'aspect souhaité.

La présente invention vise à simplifier les opérations lorsqu'une telle pièce doit présenter un aspect extérieur particulier, et/ou une propriété extérieure particulière.

Il est à noter qu'on entend ici par « aspect extérieur » ou « propriété extérieure » la présence de toute application d'une ou plusieurs couches à des fins notamment de décoration, de protection, d'amélioration des propriétés de surface, d'amélioration de la résistance mécanique, de fonctionnalisation de la surface, etc.

### Résumé de l'invention

On a observé de façon inattendue qu'un feuil préexistant comprenant une couche sèche d'un matériau de type peinture ancrée dans un dossier particulaire pouvait se comporter de façon très stable lorsqu'il est interposé entre le moule et la pièce en formation, et ce malgré les contraintes importantes (mécaniques, éventuellement thermiques, etc.) mises en jeu dans les procédés de moulage en général.

On propose à cet effet un procédé de fabrication d'une pièce tel que défini dans la revendication 1.

Des aspects préférés mais non limitatifs de ce procédé comprennent les caractéristiques additionnelles définies dans les revendications 2 à 10.

On propose selon un deuxième aspect une installation pour la fabrication d'une pièce avec un matériau de moulage telle que définie dans la revendication 11.

Des aspects préférés mais non limitatifs de cette installation comprennent les caractéristiques additionnelles définies dans les revendications 12 à 15.

### Brève description des dessins

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
- la Fig. 1 est une vue schématique en coupe verticale d'une installation de réalisation d'une pièce par un procédé dit d'infusion selon l'invention,
- la Fig. 1A est une vue en coupe à échelle agrandie d'un élément utilisé dans le processus de la Figure 1,
- la Fig. 2 est une vue partielle en coupe transversale à échelle agrandie d'une pièce réalisée selon ce procédé
- la Fig. 3 est une vue en coupe transversale de la pièce après découpage périphérique,
- la Fig. 4A est une vue en coupe transversale avec épaisseur exagérée d'une région de transition entre deux éléments du type de la Figure 1A selon une première approche,
- la Fig. 4B est une vue en coupe transversale avec épaisseur exagérée d'une région de transition entre deux éléments du type de la Figure 1A selon une deuxième approche,
- la Fig. 4C est une vue en coupe transversale avec épaisseur exagérée d'une région de transition entre deux éléments du type de la Figure 1A selon une troisième approche,
- la Fig. 5 est une vue schématique en coupe verticale d'un autre procédé de réalisation d'une pièce selon l'invention,
- la Fig. 6 est une vue schématique en coupe verticale de la pièce ainsi réalisée,
- les Figs. 7A à 7C illustrent en coupe transversale un autre procédé de réalisation d'une pièce selon l'invention, et
- la Fig. 8 illustre en coupe transversale la pièce terminée.

### Description détaillée

### Généralités

On va maintenant décrire des procédés de réalisation de pièce en volumes comportant un revêtement intégré selon l'invention.

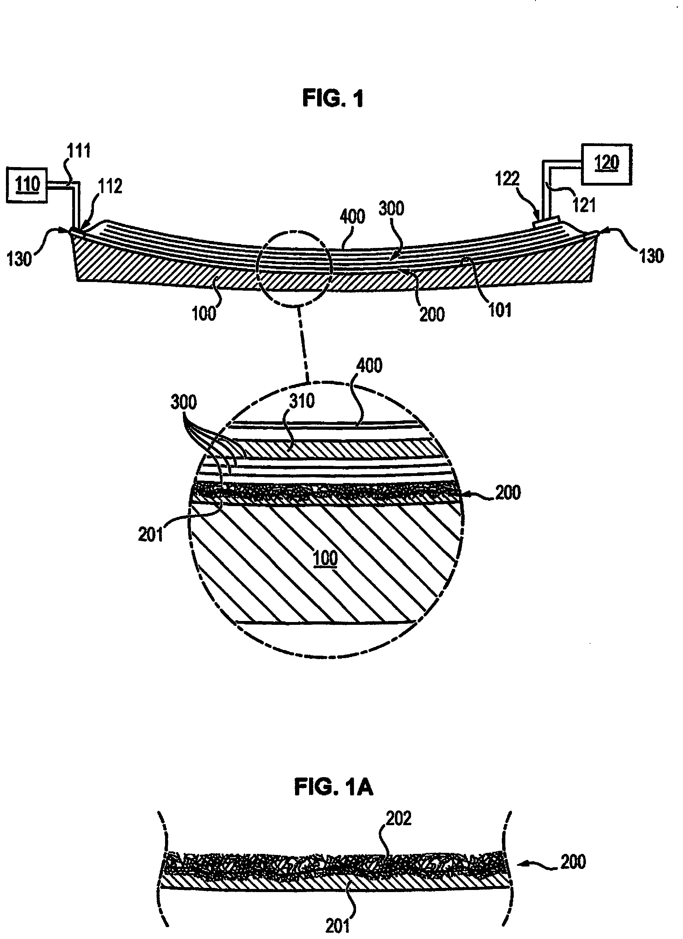

La Figure 1 illustre schématiquement en coupe transversale une installation pour la réalisation d'une pièce par une technique de type infusion.

On rappelle que cette technique consiste, de façon connue en soi, à réaliser un moule 100 pour la pièce, à disposer le long de la surface interne du moule (fond de moule, dont la forme est choisie en fonction de la pièce à réaliser), dans une région dite zone de moulage, une ou plusieurs couches d'un matériau de renforcement et/ou de rigidification 300, telles que des nappes superposées d'un tissu tel qu'un tissu de verre, de carbone, etc., puis à agencer au-dessus de cet ensemble une feuille étanche 400 dite « vacuum-bag » à laquelle sont associés des aménagements pour l'arrivée d'une résine, à savoir un réservoir 110 de résine, une ou plusieurs conduites 111 d'amenée de résine et un ou plusieurs dispositifs 112 de raccordement étanche entre la ou les conduites 111 et l'espace intérieur défini entre la feuille étanche 400 et le moule 100. L'installation comprend également un agencement pour faire le vide dans l'espace intérieur en question. Cet agencement comprend une pompe à vide 120, un ou plusieurs conduites de vide 121 et un ou plusieurs dispositifs 122 de raccordement étanche entre ces conduites et ledit espace intérieur. Comme illustré sur la Figure 1, on prévoit également de façon avantageuse une ou plusieurs nappes 310 formant drain, en général plus épaisse(s) et plus ajourée(s) que le matériau de renforcement, destinée(s) de façon connue en soi à faciliter la circulation de la résine vers toutes les zones de la pièce lors du processus d'infusion.

L'agencement pour faire le vide est complété par des aménagements d'étanchéité périphérique constitués par exemple par un joint adhésif épais 130 à haute déformabilité assurant la liaison étanche entre la périphérie de la feuille étanche 400, et pouvant aussi être utilisé pour réaliser les étanchéités au niveau de l'amenée de la résine et de l'application du vide. En substitution ou en complément du joint adhésif épais, on peut utiliser par exemple une bande adhésivée.

Avantageusement, le vide est appliqué à l'espace intérieur en un ou plusieurs emplacements distants des emplacements où la résine est amenée.

Dans ce procédé connu, l'application du vide dans l'espace intérieur provoque l'infusion, à savoir la migration régulière et progressive de la résine sur l'étendue de la pièce à partir de la ou des régions d'amenée, la résine imprégnant le matériau de renforcement 300 et venant s'appliquer intimement contre la surface supérieure du moule jusqu'à inclure intégralement le matériau de renforcement et à couvrir intégralement la surface supérieure du moule 100.

Dans un tel procédé, l'épaisseur de la pièce réalisée est déterminée principalement par la constitution et l'agencement du matériau de renforcement, et en particulier de l'épaisseur de la nappe et du nombre de plis dans le cas d'un empilement de tissés de verre, et le cas échéant du ou des drains prévus.

Une fois cette infusion réalisée et après la prise complète de la résine, la feuille d'étanchéité 400 et les différents aménagements d'étanchéité, d'amenée de résine et d'application du vide sont retirés et la pièce est séparée du moule.

Cette pièce comprend le matériau de renforcement 300 noyé dans la résine. La face inférieure de la pièce présente un état de surface qui est le négatif de l'état de surface de la surface supérieure du moule, en général lisse.

La face supérieure de la pièce est quant à elle d'aspect brut et sa régularité dépend des différents facteurs de propagation de la résine lors du processus d'infusion.

En général, la face inférieure de la pièce est sa face visible, tandis que souvent, sa face supérieure ne sera pas visible (cas d'une coque de bateau parmi de nombreux exemples).

Lorsque l'on souhaite donner à la face inférieure de la pièce un aspect particulier, on applique sur cette face un produit liquide ou en gel, typiquement une peinture, un gelcoat, etc., au rouleau, à la brosse, au pistolet, etc.

Selon un aspect inventif, on prévoit ici de disposer contre la surface supérieure 101 du moule 100, lors de la préparation de l'installation avant infusion, un feuil de peinture 200 destiné à recouvrir la face inférieure de la pièce (qui sera en général sa face extérieure, exposée ou visible) après infusion.

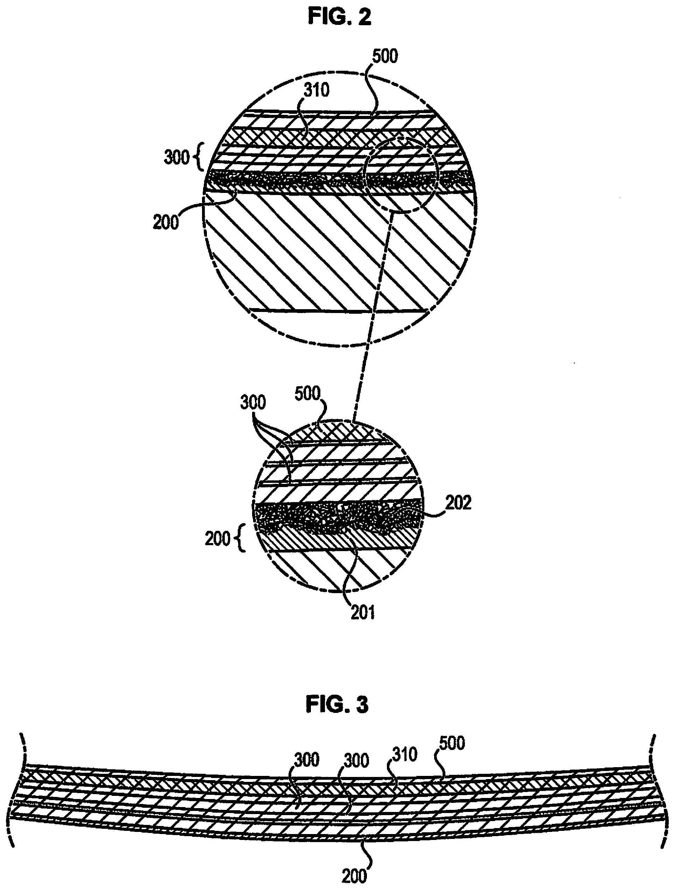

Ce feuil est réalisé par exemple conformément aux enseignements du document WO2016110799A1 au nom de la demanderesse. Comme illustré sur la Figure 2, ce feuil 200 comprend une couche d'un matériau de type peinture 201 ancrée dans un dossier fibreux 202. On entend ici par « matériau de type peinture » un matériau opaque (pigmenté) ou transparent ou translucide (vernis) qui s'applique normalement sous forme liquide ou en gel, par opposition notamment aux films minces de matière plastique, monocouche ou stratifiés.

Le type de peinture et le type de dossier fibreux peuvent être choisis dans une large gamme, en fonction de l'application souhaitée (voir plus loin).

Le feuil 200 est positionné contre le moule de telle sorte que la couche de peinture 201 se trouve côté moule, et que le dossier fibreux 202 se trouve du côté supérieur. Si nécessaire, un agent adhésif à coefficient d'adhésivité contrôlé, tel qu'un adhésif PSA (« Pressure Sensitive Adhesive ») est interposé entre le feuil 200 et le moule 100 de manière à éviter tout risque de déplacement du feuil 200 lors du processus d'infusion et à assurer un contact intime entre le feuil 200 et le fond de moule, et à éviter également toute fuite de résine dans des interstices qui pourraient exister entre le feuil 200 et le moule 100. Cet agent est choisi pour qu'après réalisation de la pièce, il puisse être éliminé sans laisser de trace.

En variante, on peut fabriquer le feuil 200 pour qu'il comporte en couche extérieure, côté peinture, un film pelable sur lequel est appliqué un film d'un agent adhésif avant sa pose en fond de moule. Dans ce cas, c'est l'ensemble adhésif et film pelable qui est séparé du produit lorsque la pièce est enlevée du moule. Le moule est ensuite débarrassé de ce reliquat.

Avec la présence du feuil 200 Lors du processus d'injection, la résine amenée dans l'espace intérieur se propage progressivement dans celui-ci sous l'effet de l'application du vide, et en particulier vient s'interposer entre les nappes du matériau de renforcement 300 et le feuil 200, en venant s'ancrer intimement dans le dossier fibreux 202 de ce dernier.

On obtient en fin de processus (après enlèvement de la feuille d'étanchéité 400 mais avant détachement du moule) et après durcissement de la résine une pièce telle qu'illustrée sur la Figure 2. On observe que le dossier fibreux 202 du feuil 200 réalise une solidarisation extrêmement robuste entre la résine infusée 500 et la couche de peinture 201. Avantageusement, la structure et la densité du dossier fibreux 202 et la viscosité de la résine 500 avant durcissement sont telles que, pendant l'infusion, la résine pénètre dans la structure du dossier fibreux 202 jusqu'à atteindre la limite de la couche de peinture 201 au sein du dossier.

Une fois le processus terminé, la résine durcie et la pièce détachée du moule 100, le produit peut faire l'objet d'une découpe périphérique pour éliminer les zones dépourvues du matériau de renforcement 300. Plus généralement, selon la nature de la pièce, différentes étapes de découpage et de finition peuvent être envisagées. La pièce finale est illustrée sur la Figure 3.

On obtient ainsi au bout du compte une pièce qui intègre sur sa face côté moule, (en général sa face visible) une couche de peinture 201 extrêmement bien ancrée. Cette couche peut avoir différentes fonctions : décor, protection, mais aussi fonctionnalisation de la surface de la pièce par intégration à la ou aux couches de peinture de couches particulières, comme décrit par exemple dans les différents brevets publiés au nom de la Demanderesse.

### Utilisation de plusieurs lés

Lorsque la taille de la pièce à fabriquer est telle que deux lés de feuil 200 ou davantage doivent être juxtaposés, il est nécessaire de prendre des dispositions pour qu'au cours du processus d'infusion, la résine ne vienne pas déborder jusqu'à l'extérieur de la couche de peinture 201 dans le passage qui existe potentiellement par nature entre les deux lés. Différentes approches peuvent être envisagées pour éviter ce problème.

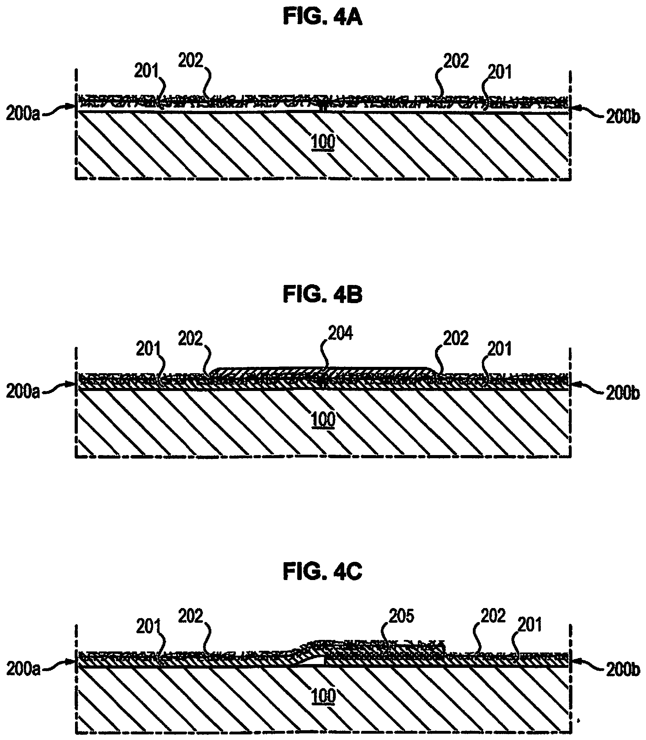

Dans une première approche et en référence à la Figure 4A, on place simplement deux lés 200a, 200b bord-à-bord. Dans le cas notamment où le feuil 200 est retenu contre le moule 100 par un adhésif, ce dernier peut être suffisant pour éviter la migration de la résine entre le moule et le feuil via l'interstice entre les deux lés bord-à-bord. En variante, on peut prévoir d'appliquer un adhésif localement sur le moule au niveau de la jonction entre les lés, cet adhésif étant éliminé après démoulage.

Selon une variante et en référence maintenant à la Figure 4B, les régions des lés avoisinant leurs bords en vis-à-vis sont traitées avant l'opération d'infusion, par exemple par projection d'un adhésif 204 de type adhésif thermofusible (« hot-melt » en terminologie anglo-saxonne) ou par enduction avec une résine, ou encore en appliquant une bande adhésive en chevauchement, de manière à créer, chevauchant les deux lés, une barrière à la migration de la résine vers l'extérieur lors de l'infusion.

Dans ce cas, le produit 204 appliqué est choisi de manière à assurer une interface à forte adhésion avec la résine utilisée pour l'infusion.

Dans une troisième approche et en référence à la Figure 4C, on place les lés 200a, 200b en chevauchement, ce qui intrinsèquement permet de faire obstacle à la migration de la résine vers l'interface entre le moule et le feuil. On peut toutefois éventuellement interposer entre les lés un adhésif approprié 205 au niveau de leur recouvrement, et/ou appliquer un adhésif en chevauchement entre les lés comme dans le cas de la Figure 4B.

### Propagation de la résine

Les conditions de l'infusion sont choisies de telle sorte que la résine vienne se propager aussi uniformément que possible dans l'espace défini entre le feuil 200 et la feuille étanche 400 en imprégnant progressivement le matériau de renforcement 300. Dans le cas où un ou plusieurs drains sont prévus, ces derniers facilitent la progression de la résine de façon compatible avec son temps de prise.

Par ailleurs, de façon connue de l'homme du métier, il est possible de multiplier les points d'amenée de la résine et/ou les points d'application du vide dans l'espace intérieur, et de recourir à d'autres moyens tels que canules, rampes d'infusion, etc.

### Conformabilité

Dans le cas où la forme du fond de moule contre laquelle est appliqué le feuil 200 est non développable, il est nécessaire que le feuil 200 puisse subir des déformations plastiques et/ou élastiques lui permettant de s'adapter intimement à la forme du fond de moule.

On peut prévoir à cet effet de réaliser le feuil d'une part avec un matériau de type peinture 201 qui lui permettre d'être étiré, voire comprimé, dans son plan, et d'autre part avec un dossier 202 qui autorise de tels mouvements. Par exemple, des peintures polyuréthanes ou élastomères de polyuréthane, etc. peuvent être utilisées.

En outre, pour assurer cette déformabilité, le dossier peut être constituée de particules compactes ou à fibres courtes généralement non entremêlées, par exemple en verre ou en verre et cellulose, ou encore d'un maillé ou tricoté à mailles extensibles donnant une possibilité d'étirement dans toutes les directions.

### Matériaux et paramètres

On va maintenant donner un certain nombre d'exemples de matériaux et de paramètres pouvant être utilisés dans un procédé d'infusion tel que décrit ci-dessus.
- type de résine infusée : résines bi-composant telles que résines époxydes, polyester, vinyl-ester, polyuréthanne, éventuellement biosourcées, ou encore matières synthétiques thermoplastiques ou thermodurcissables ;
- type de matériau de renforcement 300 :
   - en feuille ou nappe : tissus (taffetas, satin, sergé, maillé, tricoté, etc.), non-tissés,
   - particulaires : fibres ou grains de verre, carbone, aramide, Kevlar^{®}, lin, avec des grammages de l'ordre de 20 à 600 g/m2,
- type de peinture du feuil 200 et gamme d'épaisseurs : bi-composant
   (époxy ou polyuréthanne) ou mono-composant (acrylique, époxy, polyuréthanne) ; épaisseur de l'ordre de 30 à 120 µm ; on notera ici que dans le cas où le procédé d'infusion implique un chauffage, ou dans le cas où la prise de la résine engendre de la chaleur, on choisit la nature de la peinture et le cas échéant de son dossier fibreux) ;
- type de dossier fibreux du feuil 200, densité et épaisseur : tissu ou mat de verre ou de verre-cellulose, avec un grammage de l'ordre de 15 à 150 g/m2,
- type d'adhésif de retenue du feuil 200 contre le moule 100 : adhésif de type PSA (« Pressure Sensitive Adhesive »), acrylique, caoutchouc hotmelt, avec un dosage de l'ordre de 5 à 50 g/m2, choisi pour induire des forces d'adhésion limitées n'entravant pas le démoulage de la pièce.

### Autres formes de réalisation

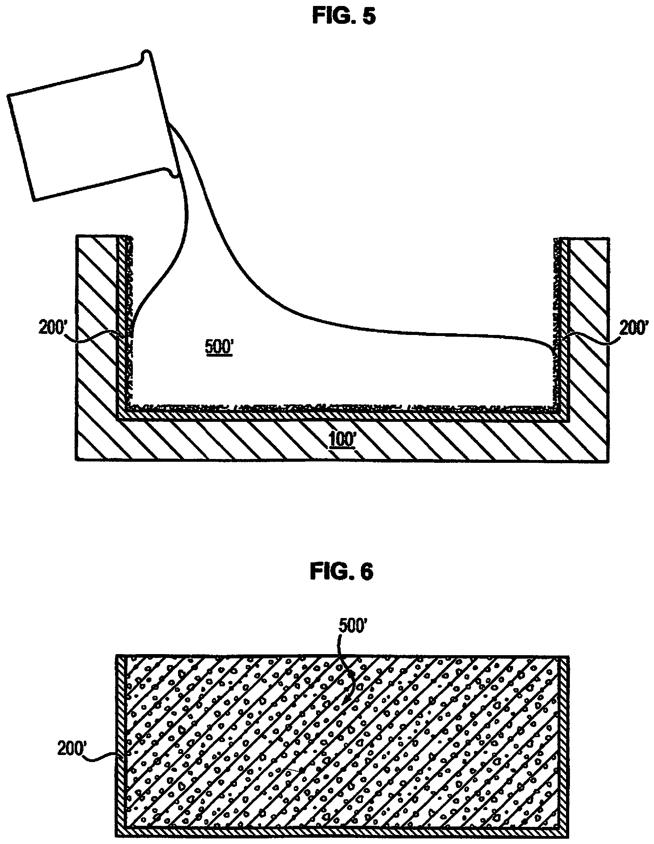

En référence maintenant à la Figure 5, un élément de construction massif décoré est réalisé en fabriquant un moule 100' dont une ou plusieurs faces reçoivent un feuil 200' par exemple réalisé conformément au document WO2016110799A1, le contact intime entre la paroi du moule et le feuil (côté peinture) étant assuré ici encore à l'aide d'un adhésif libérable de type PSA ou encore en concevant le feuil 200' avec un vernis pelable que l'on adhésive, comme décrit plus haut.

Un matériau durcissable 500' tel qu'un ciment ou un béton est ensuite coulé dans le moule de telle sorte que le matériau vienne imprégner le dossier 202' de chaque feuil 200' portant la peinture 201', jusqu'à venir au contact de cette dernière.

Après prise ou durcissement, on obtient ainsi une pièce dont une ou plusieurs faces comportent une couche décor formée par le feuil solidement ancré dans le matériau, comme illustré sur la Figure 6.

La même technique peut être mise en œuvre pour obtenir d'autres produits par exemple à base de béton ou de plâtre (plaques, carreaux, blocs, etc. avec au moins une face moulée).

On peut également mettre l'invention en œuvre dans un procédé d'injection de matière thermoplastique ou thermodurcissable. Dans les deux cas, le choix du matériau de la couche 201 est fait en fonction des températures auxquelles elle sera exposée, soit au moment de l'amenée d'une matière thermoplastique, soit au moment du traitement thermique d'une matière thermodurcissable.

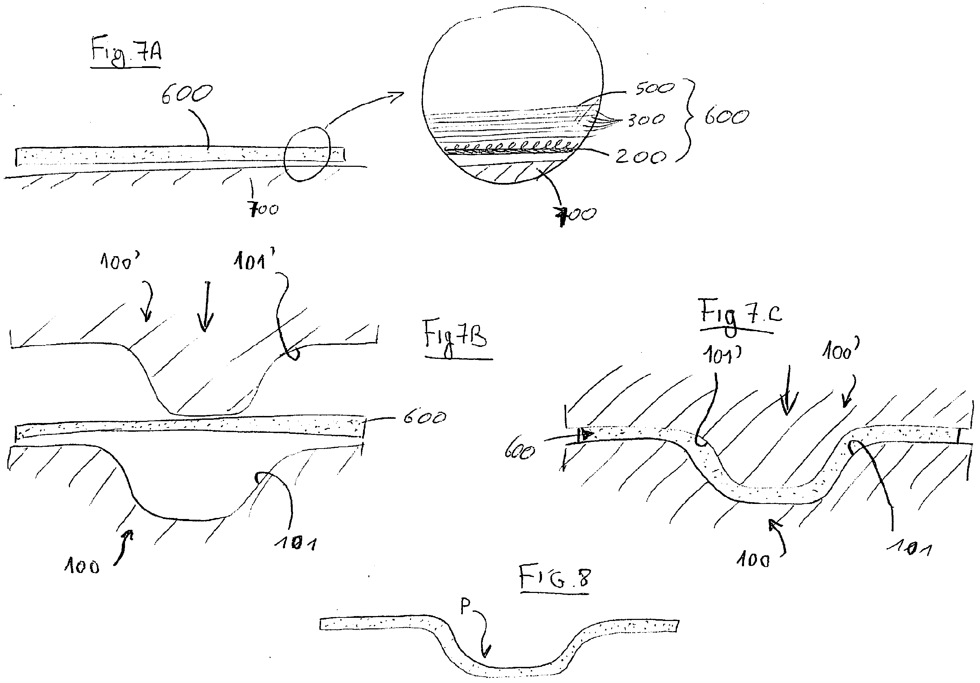

Selon encore une autre forme de réalisation, et en référence aux Figures 7A-7C et 8, le procédé tel décrit en référence aux Figures 1 à 4 est modifié pour que la mise en place du feuil 200 s'effectue non pas en fond de moule avant la mise en œuvre du procédé de moulage proprement-dit, mais en formant un ensemble composé d'une part d'une préforme de matériau de moulage et d'autre part d'un feuil 200 appliqué contre cette préforme et au moins partiellement ancré dans celle-ci.

A cet effet, on réalise, sur un premier moule 700 par exemple par un procédé d'infusion ou de pré-imprégnation sur un matériau de renforcement tel qu'un ensemble de nappes de tissu verre, une préforme 600. Le moule 700 est par exemple plan, ou présente une faible courbure. Cette préforme peut être pré-compactée par exemple par application de vide, de façon conventionnelle.

Comme illustré sur la partie agrandie à droite de la Fig. 7A, la préforme 600 comporte en outre en partie inférieure un feuil 200 par exemple du type de celui décrit dans ce qui précède, qui a préalablement été placé contre la face supérieure du moule 700 de manière à s'ancrer dans la préforme de la préforme 600 lors de la formation de cette dernière.

La préforme 600 dotée du feuil 200 est alors placée entre un moule 100 et un contre-moule 100' (Fig. 7B), dotées de faces de moulage en vis-à-vis respectivement 101, 101', ceux-ci étant rapprochés pour donner à la préforme 600 sa forme définitive (Fig. 7C) et obtenir une pièce comportant sur sa face inférieure la couche de peinture 201 du feuil.

Si nécessaire, la pièce 600 est chauffée à une température appropriée pour la rendre suffisamment malléable pour adopter la déformation nécessaire. Le matériau de moulage est typiquement dans ce cas une résine thermoplastique.

Alternativement, notamment lors du recours à une résine polymérisable, on procède aux opérations des Figs. 7B et 7C à un stade de polymérisation partiel où la préforme reste conformable.

La pièce terminée P est illustrée sur la Fig. 8.

Selon une variante non illustrée, on peut réaliser la préforme 600 sur le premier moule 700 sans prévoir à ce stade de feuil 200, et rapporter le feuil sur la préforme nue avec pression (calandrage ou autre), si nécessaire avec apport d'adhésif ou en chauffant la préforme nue.

### Remarques générales

On notera que quel que soit le mode de réalisation, la nature et l'épaisseur du dossier fibreux du feuil sont choisies de façon adaptée à la nature et à la viscosité du matériau durcissable. Notamment, la texture, la densité et l'épaisseur de la partie libre du dossier 202 du feuil 200 peuvent être choisies en fonction notamment de la viscosité et des autres propriétés du matériau de remplissage lors de sa venue en contact avec le feuil, notamment pour que ce matériau remplisse bien cette partie libre et qu'on assure un ancrage efficace. Par exemple, on prévoit une texture d'autant plus aérée que le matériau est visqueux, une épaisseur d'autant plus grande que le matériau est friable après prise ou durcissement, etc. On observe en outre que dans la plupart des cas, le dossier 202 contribue à renforcer mécaniquement la pièce réalisée au niveau de la surface recevant le feuil.

Par ailleurs, il peut être intéressant dans certains cas d'utiliser une peinture microporeuse à pores ouverts pour permettre à de l'air susceptible de rester emprisonné dans la partie libre du dossier fibreux de s'échapper.

Enfin on peut prévoir tout matériau de renforcement ou de charge approprié, selon l'application, de forme allongée à fibres courtes ou longues ou au contraire de forme compacte.

Bien entendu, la présente invention n'est nullement limitée aux formes de réalisation décrites et illustrées sur les dessins, mais l'homme du métier saura y apporter de nombreuses variantes ou modifications et saura l'appliquer à de nombreux autres domaines notamment aux procédés de pré-imprégnation (« pre-preg »), de moulage au contact, de moulage par transfert de résine (RTM pour « Resin Transfer Molding », etc. La présente invention est définie par les revendications annexées.

## Revendications

1. Procédé de fabrication d'une pièce, comprenant les étapes suivantes :
(a) prévoir un moule (100) définissant une zone de moulage et dont au moins une paroi (101) est destinée à définir une surface finie de la pièce,
(b) prévoir un feuil (200) préparé à l'avance et comprenant une couche sèche (201) d'un matériau de type peinture ancrée dans un dossier particulaire (202), le matériau de type peinture étant destiné à être au contact de ladite paroi et le dossier particulaire étant destiné à être tourné vers la zone de moulage,
(b') agencer le feuil (200) contre ladite paroi (101) du moule,
(c) remplir la zone de moulage avec un matériau de moulage (500) visqueux apte à durcir, dans des conditions telles que ledit dossier particulaire du feuil et ledit matériau de moulage s'interpénètrent par pénétration du matériau de moulage dans la structure dossier particulaire, que le feuil (200) soit appliqué fermement contre le moule et que le matériau de moulage et le feuil prennent la forme de la paroi du moule,
(d) amener le matériau de moulage à durcir, et
(e) extraire l'article du moule.

2. Procédé selon la revendication 1, **caractérisé en ce qu'**il comprend également une étape consistant à placer dans la zone de moulage préalablement au remplissage un matériau de renforcement (300) destiné à être noyé dans le matériau de moulage.

3. Procédé selon l'une des revendications 1 et 2, **caractérisé en ce qu'**il comprend une étape d'interposition, entre la paroi de moule et le feuil, d'un moyen de maintien du feuil en position.

4. Procédé selon l'une des revendications 2 et 3, **caractérisé en ce que** le matériau de moulage (500) est à base de résine.

5. Procédé selon l'une des revendications 2 à 4, **caractérisé en ce que** l'amenée du matériau de moulage (500) apte à durcir est réalisée par un processus compris dans le groupe suivant : infusion, pré-imprégnation, moulage au contact, moulage par transfert de résine, ou par versage.

6. Procédé selon la revendication 1, **caractérisé en ce qu'**il comprend, entre les étapes (b) et (c), une étape consistant à appliquer le feuil contre une préforme déformable du matériau de moulage de telle sorte qu'il existe au moins un premier degré d'interpénétration entre ledit matériau particulaire du feuil et ledit matériau de moulage et que l'ensemble présente une intégrité physique, et une étape consistant à appliquer l'ensemble contre la paroi (101) du moule (100) pour qu'il prenne la forme définitive de l'article, donnée par ladite paroi.

7. Procédé selon la revendication 6, **caractérisé en ce qu'**il comprend également une étape consistant à réaliser la préforme en imprégnant un matériau de renforcement (300) avec le matériau de moulage.

8. Procédé selon la revendication 7, **caractérisé en ce que** la préforme est réalisée sur un moule initial (600) sur lequel ledit feuil (200) a été positionné.

9. Procédé selon l'une des revendications 1 à 8, **caractérisé en ce que** le dossier particulaire (202) du feuil est un dossier fibreux choisi dans un groupe comprenant les non-tissés, les tissés, les maillés, les tricots.

10. Procédé selon l'une des revendications 1 à 9, **caractérisé en ce que** le dossier particulaire (202) du feuil est un dossier constitué de particules essentiellement non entremêlées ou tricotées, pour être étirable dans au moins une direction, et **en ce que** le matériau de type peinture (201) est étirable.

11. Installation pour la fabrication d'une pièce avec un matériau de moulage visqueux apte à durcir (500), notamment à base de résine, **caractérisée en ce qu'**elle comprend :
- un moule (100) définissant une zone de moulage et dont au moins une paroi (101) est destinée à définir une surface finie de la pièce, et
- un feuil (200) préparé à l'avance et comprenant une couche sèche (201) d'un matériau de type peinture ancrée dans un dossier particulaire (202), le matériau de type peinture étant maintenu au contact d'une paroi (101) du moule et le dossier particulaire étant tourné vers la zone de moulage et le dossier particulaire étant tel que le matériau de moulage est apte à pénétrer dans la structure dudit dossier lors du moulage.

12. Installation selon la revendication 11, **caractérisée en ce qu'**elle comprend également un matériau de renforcement (300) placé dans la zone de moulage et destiné à être noyé dans le matériau de moulage (500).

13. Installation selon l'une des revendications 11 et 12, **caractérisée en ce qu'**elle comprend, interposé entre la paroi de moule et le feuil, un moyen de maintien du feuil en position.

14. Installation selon l'une des revendications 11 à 13, **caractérisée en ce qu'**elle comprend un dispositif d'amenée du matériau de moulage apte à durcir selon un processus compris dans le groupe suivant : infusion, pré-imprégnation, moulage au contact, moulage par transfert de résine, ou un dispositif d'amenée du matériau de moulage apte à durcir par versage.

15. Installation selon l'une des revendications 11 à 14, **caractérisé en ce que** le dossier particulaire (202) du feuil est un dossier constitué de particules essentiellement non entremêlées ou tricotées, pour être étirable dans au moins une direction, et **en ce que** le matériau de type peinture (201) est étirable.

## Patentansprüche

1. Verfahren zur Herstellung eines Werkstücks, umfassend die folgenden Schritte:
(a) Vorbereiten einer Form (100), die einen Formbereich definiert und von der mindestens eine Wand (101) dazu bestimmt ist, eine fertige Oberfläche des Werkstücks zu definieren,
(b) Vorbereiten einer Folie (200), die im Voraus hergestellt wird und eine trockene Schicht (201) aus einem in einer partikelförmigen Unterlage (202) verankerten farbenartigen Material umfasst, wobei das farbenartige Material dazu bestimmt ist, mit der Wand in Kontakt zu kommen, und die partikelförmige Unterlage dazu bestimmt ist, in Richtung des Formbereichs gedreht zu werden,
(b') Anordnen der Folie (200) an der Wand (101) der Form, (c) Füllen des Formbereichs mit einem viskosen, aushärtungsfähigen Formmaterial (500) unter derartigen Bedingungen, dass die partikelförmige Unterlage der Folie und das Formmaterial sich durch Eindringen des Formmaterials in die partikelförmige Unterlage gegenseitig durchdringen, so dass die Folie (200) fest gegen die Form gedrückt wird und das Formmaterial und die Folie die Form der Formwand annehmen,
(d) Aushärtenlassen des Formmaterials, und
(e) Entnehmen des Artikels aus der Form.

2. Verfahren nach Anspruch 1, **dadurch gekennzeichnet, dass** es auch einen Schritt umfasst, der darin besteht, vor dem Füllen ein Verstärkungsmaterial (300), das in das Formmaterial eingebettet werden soll, in den Formbereich zu legen.

3. Verfahren nach einem der Ansprüche 1 und 2, **dadurch gekennzeichnet, dass** es einen Schritt des Einfügens, zwischen der Formwand und der Folie, eines Mittels zum Halten der Folie in ihrer Position umfasst.

4. Verfahren nach einem der Ansprüche 2 und 3, **dadurch gekennzeichnet, dass** das Formmaterial (500) harzbasiert ist.

5. Verfahren nach einem der Ansprüche 2 bis 4, **dadurch gekennzeichnet, dass** die Zuführung des aushärtungsfähigen Formmaterials (500) durch ein Verfahren erfolgt, das in der folgenden Gruppe enthalten ist: Infusion, Vorimprägnierung, Kontaktformung, Harztransferformung oder Gießen.

6. Verfahren nach Anspruch 1, **dadurch gekennzeichnet, dass** es zwischen den Schritten (b) und (c) einen Schritt umfasst, der darin besteht, die Folie gegen eine verformbare Vorform des Formmaterials anzubringen, so dass mindestens ein erster Grad der Durchdringung zwischen dem Partikelmaterial der Folie und dem Formmaterial besteht und die Baugruppe eine physikalische Unversehrtheit aufweist, und einen Schritt, der darin besteht, die Baugruppe gegen die Wand (101) der Form (100) anzubringen, damit sie die endgültige Form des Artikels annimmt, die von der Wand vorgegeben wird.

7. Verfahren nach Anspruch 6, **dadurch gekennzeichnet, dass** es auch einen Schritt umfasst, der darin besteht, die Vorform durch Imprägnierung eines Verstärkungsmaterials (300) mit dem Formmaterial herzustellen.

8. Verfahren nach Anspruch 7, **dadurch gekennzeichnet, dass** die Vorform auf einer Anfangsform (600) hergestellt wird, auf der die Folie (200) positioniert wurde.

9. Verfahren nach einem der Ansprüche 1 bis 8, **dadurch gekennzeichnet, dass** die partikelförmige Unterlage (202) der Folie eine faserige Unterlage ist, die aus einer Gruppe ausgewählt ist, die Vliesstoffe, Gewebe, Maschenware und Strick umfasst.

10. Verfahren nach einem der Ansprüche 1 bis 9, **dadurch gekennzeichnet, dass** die partikelförmige Unterlage (202) der Folie eine Unterlage ist, die aus im Wesentlichen nicht verwobenen oder gestrickten Partikeln besteht, um in mindestens eine Richtung dehnbar zu sein, und dass das farbenartige Material (201) dehnbar ist.

11. Anlage zur Herstellung eines Werkstücks mit einem viskosen, aushärtungsfähigen Formmaterial (500), insbesondere auf Harzbasis, **dadurch gekennzeichnet, dass** sie Folgendes umfasst:
- eine Form (100), die einen Formbereich definiert und von der mindestens eine Wand (101) dazu bestimmt ist, eine fertige Oberfläche des Werkstücks zu definieren, und
- eine Folie (200), die im Voraus vorbereitet ist und eine trockene Schicht (201) aus einem in einer partikelförmigen Unterlage (202) verankerten farbenartigen Material umfasst, wobei das farbenartige Material in Kontakt mit einer Wand (101) der Form gehalten wird und die partikelförmige Unterlage in Richtung des Formbereichs gedreht wird und die partikelförmige Unterlage so ist, dass das Formmaterial beim Formen in die Struktur der Unterlage eindringen kann.

12. Anlage nach Anspruch 11, **dadurch gekennzeichnet, dass** sie auch ein Verstärkungsmaterial (300) umfasst, das im Formbereich platziert und zum Eintauchen in das Formmaterial (500) bestimmt ist.

13. Anlage nach einem der Ansprüche 11 und 12, **dadurch gekennzeichnet, dass** sie zwischen der Formwand und der Folie ein Mittel zum Halten der Folie in ihrer Position umfasst.

14. Anlage nach einem der Ansprüche 11 bis 13, **dadurch gekennzeichnet, dass** sie eine Vorrichtung zur Zuführung des aushärtungsfähigen Formmaterials gemäß einem Verfahren, das in der folgenden Gruppe enthalten ist: Infusion, Vorimprägnierung, Kontaktformung, Harztransferformung; oder eine Vorrichtung zur Zuführung des aushärtungsfähigen Formmaterials durch Gießen umfasst.

15. Anlage nach einem der Ansprüche 11 bis 14, **dadurch gekennzeichnet, dass** die partikelförmige Unterlage (202) der Folie eine Unterlage ist, die aus im Wesentlichen nicht verwobenen oder gestrickten Partikeln besteht, um in mindestens eine Richtung dehnbar zu sein, und dass das farbenartige Material (201) dehnbar ist.

## Claims

1. Method for manufacturing a component, comprising the following steps:
(a) providing a mould (100) which defines a moulding area, at least one wall (101) of which is intended to define a finished surface of the component,
(b) providing a film (200) prepared in advance and comprising a dry layer (201) of a paint-type material entrenched in a particulate backing (202), the paint-type material being intended to be in contact with said wall and the particulate backing intended to be turned towards the moulding area,
(b') arranging the film (200) against said wall (101) of the mould,
(c) filling the moulding area with a viscous moulding material (500) capable of hardening, under conditions whereby said particulate backing of the film and the moulding material interpenetrate, by penetration of the moulding material into the structure of the particulate backing, such that the film (200) is firmly pressed against the mould and both the moulding material and the film conform to the shape of the mould wall,
(d) causing the moulding material to harden, and
(e) removing the item from the mould.

2. Method according to claim 1, **characterised in that** it also comprises a step of placing a reinforcement material (300), which is intended to be embedded in the moulding material, in the moulding area prior to filling.

3. Method according to any one of claims 1 and 2, **characterised in that** it comprises a step of interposing a means for holding the film in position between the mould wall and the film.

4. Method according to any one of claims 2 and 3, **characterised in that** the moulding material (500) is resin-based.

5. Method according to any one of claims 2 to 4, **characterised in that** the moulding material (500) capable of hardening is supplied via a process selected from the following group: infusion, pre-impregnation, contact moulding, resin transfer moulding, or pouring.

6. Method according to claim 1, **characterised in that** it comprises, between steps (b) and (c), a step of applying the film against a deformable preform of the moulding material, in such a way that there is at least a first degree of interpenetration between said particle material of the film and said moulding material, and that the assembly maintains physical integrity, and a step of pressing the assembly against the wall (101) of the mould (100) so that it takes on the final shape of the item as defined by said wall.

7. Method according to claim 6, **characterised by** the fact that it also comprises a step of producing the preform by impregnating a reinforcement material (300) with the moulding material.

8. Method according to claim 7, **characterised in that** the preform is produced using an initial mould (600) on which the said film (200) has been positioned.

9. Method according to any one of claims 1 to 8, **characterised in that** the particulate backing (202) of the sheet is a fibrous backing selected from a group comprising nonwovens, wovens, meshes, and knits.

10. Method according to any one of claims 1 to 9, **characterised in that** the particulate backing (202) of the film is a backing consists of essentially non-intertwined or knitted particles, allowing it to be stretchable in at least one direction, and **in that** the paint-type material (201) is also stretchable.

11. Installation for the production of a component using a viscous moulding material capable of hardening (500), particularly resin-based, **characterised by** the fact that it comprises:
- a mould (100) defining a moulding area, at least one wall (101) of which is intended to define a finished surface of the component, and
a film (200) prepared in advance and comprising a dry layer (201) of a paint-type material entrenched in a particulate backing (202), the paint-type material being maintained in contact with a wall (101) of the mould, and the particulate backing being oriented towards the moulding area, such that the moulding material can penetrate into the structure of said backing during the moulding process.

12. Installation according to claim 11, **characterised in that** it also comprises a reinforcement material (300) placed in the moulding area and intended to be embedded in the moulding material (500).

13. Installation according to any one of claims 11 and 12, **characterised by** the inclusion of a means for holding the film in position, interposed between the mould wall and the film.

14. Installation according to any one of claims 11 to 13, **characterised in that** it comprises a device for supplying the moulding material capable of hardening using a process selected from the following group: infusion, pre-impregnation, contact moulding or resin transfer moulding, or a device for supplying the moulding material capable of hardening by pouring.

15. Installation according to one of claims 11 to 14, **characterised in that** the particulate backing (202) of the film consists of particles that are essentially non-intertwined or knitted, allowing it to be stretchable in at least one direction, and **in that** the paint-type material (201) is also stretchable.
